(19) Europäisches Patentamt / European Patent Office / Office européen des brevets

(11) **EP 4 241 994 B1**

(12) **EUROPEAN PATENT SPECIFICATION**

(45) Date of publication and mention
of the grant of the patent:
**25.03.2026  Bulletin 2026/13**

(21) Application number: **21906607.3**

(22) Date of filing: **14.12.2021**

(51) International Patent Classification (IPC):
*C09D 11/54* (2014.01)   *C09D 11/38* (2014.01)
*C09D 11/10* (2014.01)   *C09D 11/322* (2014.01)
*B41J 2/01* (2006.01)   *B41M 5/00* (2006.01)
*D06P 5/00* (2006.01)   *D06P 5/08* (2006.01)
*D06P 5/30* (2006.01)

(52) Cooperative Patent Classification (CPC):
**C09D 11/10; C09D 11/322; C09D 11/38;
C09D 11/54; D06P 1/44; D06P 1/5242; D06P 1/525;
D06P 1/5257; D06P 1/5264; D06P 1/5278;
D06P 1/6533; D06P 5/002; D06P 5/22; D06P 5/225;
D06P 5/30**

(86) International application number:
**PCT/JP2021/046018**

(87) International publication number:
**WO 2022/131245 (23.06.2022 Gazette 2022/25)**

(54) **INKJET PROCESSING FLUID, AND INK SET AND PRINTING METHOD USING SAME**

TINTENSTRAHLVERARBEITUNGSFLÜSSIGKEIT UND TINTENSATZ UND DRUCKVERFAHREN
DAMIT

FLUIDE DE TRAITEMENT PAR JET D'ENCRE, ET JET D'ENCRE AINSI QUE PROCÉDÉ
D'IMPRESSION L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.12.2020  JP 2020210373**

(43) Date of publication of application:
**13.09.2023  Bulletin 2023/37**

(73) Proprietor: **Kyocera Corporation
Kyoto-shi Kyoto 612-8501 (JP)**

(72) Inventor: **SUGIMOTO, Hiroko
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(56) References cited:
WO-A1-2012/111855   WO-A1-2014/023675
JP-A- 2004 090 456   JP-A- 2006 152 454
JP-A- 2006 342 455   JP-A- 2011 251 436
JP-A- 2014 176 996   JP-A- 2014 194 106
JP-A- 2019 026 963   JP-A- H10 237 372
JP-A- H10 237 372   JP-B2- 5 721 048

## EP 4 241 994 B1

## Description

## Technical Field

The present invention relates to an inkjet processing solution. The present invention further relates to uses thereof, an ink set including the same, and a textile printing method using the same.

## Background Art

It is known that, in the inkjet recording method, a preprocessing solution is applied prior to application of ink. For example, a method using a processing solution containing fine particles as components forming a color material and an aggregated matter in ink has been reported.

Patent Literature 1 discloses an inkjet recording method in which a colorless fluid containing fine silica particles is applied to a targeted recording material, and then a non-aqueous recording fluid containing oil black is applied. Patent Literature 2 discloses use of a solution containing fine particles or fine particles and a binder polymer as a processing solution.

The fluid containing such fine particles contains reactive fine particles, so that a reaction constituent can be added to the fluid by a large amount. Meanwhile, a fluid composition containing reactive fine particles contains corrosive ions at a high concentration. This is because corrosive ions are inevitably contained during production of the component of the fluid composition, and corrosive ions such as chlorine ions and acids are added as sub ions to secure dispersion stability of a component reactive with the color material. For this reason, simply using the fluid composition as a raw material of a processing solution causes, in many cases, a problem due to fluid-contact of the corrosive ions, which problem may corrode a metal-based material of a head that discharges the processing solution.

Regarding this problem due to the fluid-contact of corrosive ions, there has been reported that the fluid-contact is improved by specifying the chlorine ion concentration in a processing solution containing a cationic polymer to 3000 ppm or less (Patent Literature 3). In addition, there has also been reported a method for producing processing solution in which corrosive ions (halogen ions) are replaced with less corrosive ions by an ion exchange method in which ions are replaced during production of a processing solution containing one or more kinds of components reactive with a color material (Patent Literature 4).

WO 2012/111855 A1, JP 5721048 B2, WO 2014/023675 A1, and JP H10 237372 A also disclose inkjet processing solutions including a cationic polymer. Moreover, JP 2006 152454 A, JP 2019 026963 A, JP 2014 194106 A, JP 2004 090456 A, JP H10 237372 A, and JP 2011 251436 A disclose processing solutions for inkjet printing applications.

## Citation List

## Patent Literature

Patent Literature 1: JP H4-259590 A
Patent Literature 2: JP H6-92010 A
Patent Literature 3: JP H10-23 73 72 A
Patent Literature 4: JP 2004-90456 A

## Summary of Invention

The present invention provides an inkjet processing solution according to claim 1, a use according to claim 2, an ink set according to claim 4, and a textile printing method according to claim 5. A preferred embodiment is described in the dependent claim.

## Brief Description of Drawing

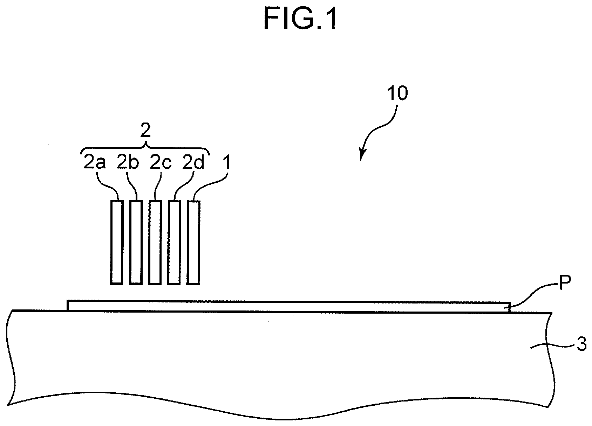

FIG. 1 is an example of inkjet recording performed using an inkjet processing solution as described.

## Detailed Description

According to the description in Patent Literature 3 as described above, a cationic polymer, a cationic surfactant, or the like is used as the cationic substance constituting a fluid composition, and the cationic substance contains a little amount of chlorine ions such as hydrochloric acid roots resulting from an acid treatment or the like performed in synthesis and purification of the cationic substance (paragraph 0008). Thus, it is considered that when the chlorine concentration is 3000 ppm or less, the added amount of the cationic polymer as a reaction constituent with a color material cannot be increased, and the effect of aggregating with the color material cannot be sufficiently obtained.

In addition, it was found that removing halogen ions by an ion exchange method as in the technique disclosed in Patent Literature 4 makes a cationic polymer unstable to heat, which disadvantageously causes yellowing by heat at a place where the processing solution is applied.

Meanwhile, all of Patent Literatures 1 to 4 described above are about inkjet processing solutions for printing on a paper medium such as a plain paper, and are not assuming textile printing on cloth or the like. In a case of inkjet recording used for textile printing, a processing solution containing a binder resin is usually used for pretreatment. The binder resin penetrating into gaps between fibers causes binding of fibers to each other and disadvantageously makes the fabric stiff and degrades the texture, such as touch, of the fabric. These disadvantages are peculiar to textile printing.

[Inkjet processing solution]

An inkjet processing solution (hereinafter, also simply referred to as a "processing solution") according to the present invention contains a cationic polymer and lactic acid, has a halogen ion concentration of 5 kg/m$^3$ or less, and a pH of 7 to 9.5.

The processing solution is a preprocessing solution applied to a recording target prior to application of ink. The cationic polymer contained in the processing solution reacts with and aggregates with the pigment contained in the ink, which is subsequently applied, to secure excellent chromogenic property.

The processing solution has a low halogen ion concentration, so that corrosion of an inkjet head member due to halogen ions can be suppressed. In addition, since the processing solution includes lactic acid and has a pH in the range described above, yellowing of the cationic polymer having a low halogen concentration can be reduced.

That is, according to the inkjet processing solution, corrosion of an inkjet head member and yellowing of a recording medium can be suppressed in inkjet recording, and excellent chromogenic property (image density) can be obtained. Furthermore, for textile printing, use of the inkjet processing solution is advantageous in improving the texture of fabric.

The cationic polymer contained in the inkjet processing solution of the present invention is a quaternary ammonium-containing cationic polymer selected from diallyldimethylammonium sulfur dioxide copolymer, diallyldimethylammonium chloride acrylamide copolymer, dimethylamine-ammonia-epichlorohydrin polycondensate, and dimethylamine-ammonia-epichlorohydrin polycondensate, and mixtures thereof.

The weight-average molecular weight of the cationic polymer used is not particularly limited, and is preferably 1000 to 10000. The molecular weight in this range is considered to improve the performance of discharging from the inkjet head.

The content of the cationic polymer is 0.5 weight % or more and 29.5 weight % or less with respect to the entire processing solution. The content of the cationic polymer in this range is considered to further improve chromogenic property (image density) and further suppress yellowing of a recording medium. A further preferable lower limit value of the content of the cationic polymer is 1 weight % or more. Further preferably, the upper limit value is 20 weight % or less.

The processing solution further contains lactic acid, and the lactic acid may be contained in a form of lactic acid ions.

The content of the lactic acid is 17.5 weight % or less with respect to the entire processing solution. It is considered that the content of the lactic acid being in this range further improves chromogenic property (image density) and can further suppress yellowing of the recording medium. A further preferable upper limit value of the content of the cationic polymer is 15 weight % or less.

The lower limit value of the lactic acid content is 0.2 weight % or more, preferably 0.3 weight % or more, from the viewpoint of obtaining the effect of stabilizing the cationic polymer.

In the processing solution the remainder other than the components described above is usually water or an aqueous solvent composed of water and organic solvent.

Examples of the organic solvent that can be contained in the processing solution include glycol, alcohol, aliphatic hydrocarbon, aromatic hydrocarbon, ketone, ester, ether, and vegetable oil. Examples of the water-soluble organic solvent include polyhydric alcohol, ether compounds of polyhydric alcohol, nitrogen-containing compounds, alcohol compounds, sulfur-containing compounds, propylene carbonate, and ethylene carbonate.

Examples of the polyhydric alcohol include first diol compounds having 5 or more and 8 or less carbon atoms, second diol compounds having 2 or more and 4 or less carbon atoms, 1,2,6-hexanetriol, glycerin, trimethylolpropane, sugar alcohol (for example, xylitol), and saccharide (for example, xylose, glucose, and galactose).

Examples of the first diol compound include 2-methylpentane-2, 4-diol, triethylene glycol, tetraethylene glycol, 1,5-pentanediol, and 1,2-hexanediol.

Examples of the second diol compound include ethylene glycol, 1,2-propanediol, 1,3-propanediol, butylene glycol, and diethylene glycol.

Examples of the ether compound of polyhydric alcohol include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, dipropylene glycol monobutyl ether, and ethylene oxide adducts of diglycerin.

Examples of the nitrogen-containing compound include pyrrolidone, N-methyl-2 pyrrolidone, cyclohexylpyrrolidone, and triethanolamine.

Examples of the alcohol compound include ethanol, isopropyl alcohol, butyl alcohol, and benzyl alcohol.

Examples of the sulfur-containing compound include thiodiethanol, thiodiglycerol, sulfolane, and dimethyl sulfoxide.

Among the organic solvents described above, glycols such as propylene glycol are preferably used. These can be used solely or in combination of two or more kinds.

When the processing solution contains an organic solvent, the content of the organic solvent is preferably 3 weight % or more and 50 weight % or less with respect to the entire processing solution. The organic solvent contained in this range is advantageous in that a processing solution having a viscosity allowing stable discharge can be provided and drying of the processing solution can be relieved.

Furthermore, the processing solution may contain a surfactant to adjust the surface tension of the processing solution to an appropriate level. The surfactant that can be used is not particularly limited, and examples of the surfactant include nonionic surfactants, cationic surfactants, and anionic surfactants.

When the processing solution contains a surfactant, the content of the surfactant is preferably 0.1 weight % or more and 5 weight % or less with respect to the entire processing solution. Containing the surfactant in this range is advantageous in that the processing solution having a surface tension allowing stable discharge can be provided.

The processing solution may contain other additives as long as the effect is not deteriorated. Examples of the additive include dissolution stabilizers, desiccation inhibitors, antioxidants, viscosity modifiers, pH adjusters, and antifungal agents.

The processing solution of the present invention, as described above, has a halogen ion concentration of 5 kg/m$^3$ or less and a pH of 7 to 9.5. The halogen ion concentration can be adjusted by obtaining a cationic polymer having a halogen ion concentration adjusted using an ion exchange resin as described later.

The pH of the processing solution can be adjusted, for example, by adjusting the added amount of lactic acid.

The halogen ion concentration of the processing solution is more preferably 3 kg/m$^3$ or less. A more preferable pH range of the processing solution is 7 to 9.

[Method for producing processing solution]

The method for producing the processing solution is not particularly limited. An example will be described below. First, a column is filled with a basic ion exchange resin and a cationic polymer is passed through the column to obtain an adjusted cationic polymer having a reduced halogen ion concentration.

The obtained adjusted cationic polymer, lactic acid, an aqueous solvent, and components to be added as necessary (for example, a surfactant) are mixed, whereby the processing solution can be obtained.

[Inkjet recording method using processing solution]

Next, a method of using the processing solution and the like will be described. The processing solution can be used as a preprocessing solution for an inkjet recording device 10, for example, as illustrated in FIG. 1.

Specifically, the inkjet recording device 10 illustrated in FIG. 1 may include a processing head 1 and a recording head 2, and the recording head 2 may include a first recording head 2a, a second recording head 2b, a third recording head 2c, and a fourth recording head 2d.

The processing head 1 discharges the processing solution to at least an image forming region of a recording target P. The processing solution used here is the processing solution described above. The processing head 1 is not particularly limited. Examples include a piezo head and a thermal inkjet head.

The recording head 2 ejects ink to the image forming region of the recording target P. The first recording head 2a, the second recording head 2b, the third recording head 2c, and the fourth recording head 2d included in the recording head 2 respectively discharge inks of different colors (for example, yellow ink, magenta ink, cyan ink, and black ink). The number of recording heads is not limited to 4, and the number of recording heads may be 1 to 3 or 5 or more. The recording head 2 is not particularly limited. Examples include a piezo head and a thermal inkjet head.

The recording target P is placed on a mounting table 3. The processing head 1 and the recording head 2 are disposed above the mounting table 3 so that the processing solution and the ink can be discharged to the recording target P. Driven by a motor (not illustrated), the mounting table 3 horizontally moves in a direction from the processing head 1 toward the recording head 2 (for example, the leftward direction in FIG. 1). The horizontal movement of the mounting table 3 conveys the recording target P on the mounting table 3.

The recording target P is not particularly limited, and may be a medium such as a plain paper, though the processing solution can exhibit a further effect when used in an application for textile printing. Thus, the recording target P is preferably a medium that may be a textile printing target.

In the inkjet recording, first, the mounting table 3 on which the recording target P is placed moves horizontally to convey the recording target P to a position where the recording target P faces the processing head 1. The processing solution is discharged from the processing head 1 to the recording target P. The processing head 1 may discharge the processing solution only to an image forming region of the recording target P, may discharge the processing solution to a region wider than the image forming region of the recording target P, or may discharge the processing solution to the entire surface of the recording target P. It is preferable that the processing head 1 discharges the processing solution only to the image forming region of the recording target P so as to reduce the used amount of the processing solution to suppress degrading of the texture of a textile printing article.

After the processing solution is discharged from the processing head 1, the mounting table 3 on which the recording target P is placed further horizontally moves to convey the recording target P to the position where the recording target P faces the recording head 2. Then, the recording head 2 ejects ink to the image forming region of the recording target P. In this manner, an image is formed by the ink in the image forming region of the recording target P.

Although not illustrated, it may be configured that, after the ink is discharged by the recording head 2, the mounting table 3 on which the recording target P is placed further horizontally moves and a post-processing solution is discharged from another processing head. The post-processing solution is a processing solution having non-chromogenic property and does not develop color even when applied to the recording target P, and is a processing solution that exhibits a function of enhancing fixability and ruggedness (resistance to rubbing and scraping) of an ink image printed on the recording target P by the recording head 2. As such a post-processing solution, a silicone-based processing solution can be used. In this manner, a processed film is formed by the post-processing solution on the image formed in the image forming region of the recording target P.

After discharging of the post-processing solution, the mounting table 3 on which the recording target P is placed further horizontally moves to convey the recording target P to a position where the recording target P faces a heating unit (not illustrated), and the heating unit heats the recording target P to dry the ink and the processing solution. The heating temperature is, for example, 120°C or more and 180°C or less. The heating time is, for example, 1 minute or more and 10 minutes or less. By heating, volatile components contained in the ink and the processing solution are dried, which facilitates fixation of the ink and the processing solution to the recording target P. As a result, the ink forms an image, and at the same time, the recording target P processed by the processing solution is formed.

Note that, the way of using the processing solution is not limited to that for the inkjet recording device 10. The way of using the processing solution can be changed, for example, as described in the following exemplary modifications. For example, the inkjet recording device 10 may include a spray for spraying the processing solution instead of the processing head 1 that discharges the processing solution. Alternatively, the processing using the processing solution may be performed by immersing the recording target P in the processing solution stored in a tank. Furthermore, in the inkjet recording device 10, the mounting table 3 moves horizontally, but the processing head 1 and the recording head 2 may move horizontally with the mounting table 3 fixed. Alternatively, simultaneously with the mounting table 3 moving horizontally or the processing head 1 and the recording head 2 moving horizontally in the conveyance direction of the recording target P, the processing head 1 and the recording head 2 may move horizontally in a direction orthogonal to the conveyance direction of the recording target P.

That is, as long as the processing head 1 and the recording head 2 are provided, the effect of using the processing solution can be obtained regardless of the type of inkjet recording device.

[Ink]

The ink used with the processing solution for inkjet recording is not particularly limited. For example, an ink containing a pigment and an aqueous medium can be used. The ink may further contain at least one selected from the group consisting of surfactants, polyols, and binder resin particles as required.

As a pigment, for example, a dispersible pigment dispersed in an aqueous medium can be used. From the viewpoint of obtaining an ink excellent in image density, hue, and color stability, the volume median diameter ($D_{50}$) of the pigment is preferably 30 nm or more and 250 nm or less, more preferably 70 nm or more and 160 nm or less. In the present specification, the measured volume median diameter ($D_{50}$) is a median diameter measured using a laser diffraction/-scattering particle size distribution measuring apparatus ("LA-950", manufactured by HORIBA, Ltd.).

Examples of the pigment include yellow pigments, orange pigments, red pigments, blue pigments, purple pigments, and black pigments. Examples of the yellow pigment include C.I.Pigment Yellow (74, 93, 95, 109, 110, 120, 128, 138, 139, 151, 154, 155, 173, 180, 185, and 193). Examples of the orange pigment include C.I.Pigment Orange (34, 36, 43, 61, 63, and 71). Examples of the red pigment include C.I.Pigment Red (122 and 202). Examples of the blue pigment include C.I.Pigment Blue (15, more specifically 15:3). Examples of the purple pigment include C.I.Pigment Violet (19, 23, and 33). Examples of the black pigment include C.I.Pigment Black (7).

The content of the pigment is preferably 1 weight % or more and 12 weight % or less, more preferably 1 weight % or more and 7 weight % or less, with respect to the total weight of the ink. The content of the pigment being 1 weight % or more improves the image density of a recorded object to be formed. The content of the pigment being 12 weight % or less gives an ink having high fluidity.

In particular, the ink preferably contains an anionic pigment. Using such an ink, electric reactive aggregation of the cationic polymer and the anionic pigment contained in the processing solution described above occurs on the surface of the recording target, and this suppresses permeation of a binder resin (binder resin described later) contained in the ink into the recording medium. When the recording medium is a fabric, the chances of the binder resin penetrating into gaps between fibers to bind the fibers to each other can be lowered. Accordingly, the fabric texture (touch, etc.) of the textile printing target can be improved.

Specifically, as the anionic pigment, an anionic pigment having an anion group such as a carboxyl group, a sulfonic acid group, a phosphoric acid group, a phosphonic acid group, a phenylsulfonic acid group, and a phenylcarboxyl group is more preferable.

The aqueous medium contained in the ink is a medium containing water as a main component. The aqueous medium may function as a solvent or as a dispersion medium. Specific examples of the aqueous medium include water and a mixed solution of water and a polar solvent. Examples of the polar solvent contained in the aqueous medium include methanol, ethanol, isopropyl alcohol, butanol, and methyl ethyl ketone. The content of water in the aqueous medium is preferably 90 weight % or more, preferably in particular, 100 weight %. The content of the aqueous medium is preferably 5 weight % or more and 70 weight % or less, more preferably 40 weight % or more and 60 weight % or less, with respect to the total weight of the ink.

Furthermore, the surfactant contained in the ink improves the wettability of the ink on the recording target. Examples of the surfactant include anionic surfactants, cationic surfactants, nonionic surfactants, and amphoteric surfactants. The surfactant contained in the ink is preferably a nonionic surfactant. The nonionic surfactant is preferably a surfactant having an acetylene glycol structure, more preferably an acetylene diol ethylene oxide adduct. The HLB value of the surfactant is preferably 3 or more and 20 or less, more preferably 6 or more and 16 or less, further more preferably 7 or more and 10 or less. The HLB value of the surfactant is calculated, for example, by Griffin method using the formula "HLB value = $20 \times$ (sum of formula weight of hydrophilic portions)/molecular weight". To improve the image density while suppressing offset of an image, the content of the surfactant is preferably 0.1 weight % or more and 5.0 weight % or less, more preferably 0.5 weight % or more and 2.0 weight % or less, with respect to the total weight of the ink.

Furthermore, containing a polyol in ink suitably adjusts the viscosity of the ink. A polyol contained in ink is preferably a diol or a triol. Examples of the diol include glycol compounds, more specifically, ethylene glycol, propylene glycol, diethylene glycol, triethylene glycol, and tetraethylene glycol. Examples of triol include glycerin.

To suitably adjust the viscosity of an ink containing a polyol, it is preferable that the content of the polyol is 5 weight % or more and 60 weight % or less, more preferably 20 weight % or more and 50 weight % or less, with respect to the total weight of the ink.

The binder resin particles contained in the ink are dispersed in the aqueous medium. The binder resin particles function as a binder that bonds the textile printing target and the pigment to each other. Thus, with the binder resin particles contained in the ink, a textile printing article having excellent pigment fixability can be obtained.

Examples of the resin contained in the binder resin particles include urethane resin, (meth)acrylic resin, styrene-(meth)acrylic resin, styrene-maleic acid copolymer, vinyl naphthalene-(meth)acrylic acid copolymer, and vinyl naphthalene-maleic acid copolymer. The resin contained in the binder resin particles is preferably a urethane resin. The content of the urethane resin in the binder resin particles is preferably 80 weight % or more, more preferably 100 weight %.

The content of the binder resin is preferably 1 weight % or more and 20 weight % or less, more preferably 2 weight % or more and 10 weight % or less, with respect to the total weight of the ink. When the content of the binder resin particles is 1 weight % or more, a recording target with excellent pigment fixability can be obtained. Meanwhile, when the content of the binder resin particles is 20 weight % or less, the ink can be stably discharged to the recording target.

Furthermore, the ink may further contain a known additive (more specifically, for example, a dissolution stabilizer, a desiccation inhibitor, an antioxidant, a viscosity modifier, a pH modifier, or an antifungal agent) as necessary.

The ink used is produced, for example, by mixing a pigment, an aqueous medium, and a component added as necessary (for example, a surfactant, a polyol, and binder resin particles) using a stirrer. The mixing time is, for example, 1 minute or more and 30 minutes or less.

[Ink set]

The present invention is also directed at an ink set including the inkjet processing solution described above and an inkjet ink.

The inkjet ink is an ink containing an anionic pigment, preferably an ink containing an anionic pigment and a binder resin.

In particular, the ink set is preferably a textile printing ink set that exhibits, when used for textile printing, an excellent effect of improving the texture of a textile printing target.

[Textile printing method]

The present invention is also directed at a textile printing method using the inkjet processing solution described above and an inkjet ink.

When using a pigment ink with which printing can be performed on many kinds of cloths, it is necessary to fix the pigment to a surface of fabric. Failing to fix the pigment to the surface of fabric results in poor fastness to rubbing. Meanwhile, the pigment and the binder resin not staying on the surface of fabric and deeply penetrating into the fabric result in poor chromogenic property, and moreover the ink and the binder resin that are entered between fibers disadvantageously cause hard touch, that is, degradation of texture.

According to the textile printing method, the above-described problem can be addressed to be solved by using the processing solution described above.

Specifically, the problem can be solved by substantially the same method as the recording method described in the "Inkjet recording method using processing solution", except that the recording target is changed to a textile printing target. Examples of the textile printing target include all kinds of cloths. Specifically, the cloth may be a woven fabric a knitted fabric, or a nonwoven fabric. The examples include cotton fabric, silk fabric, hemp fabric, acetate fabric, rayon fabric, nylon fabric, polyurethane fabric, and polyester fabric.

As the inkjet ink for textile printing, among inks described above, an ink containing an anionic pigment is preferably used, more preferably an ink containing an anionic pigment and a binder resin is used.

According to the textile printing method, excellent chromogenic property can be obtained while suppressing corrosion of an inkjet head member and yellowing of a textile printing target, and moreover, degrading of the texture of a fabric that is a textile printing target can be suppressed. Thus, the method is very useful in industrial use.

The processing solution does not require a work such as padding and drying the fabric in advance, and can be applied to the fabric by an inkjet system. This advantageously and greatly reduces the work of adjusting the fabric.

**Examples**

The present disclosure will be described more specifically below with reference to examples, though the present disclosure is by no means limited by the examples.

(Example 1)

• Adjustment of cationic polymer

The column was filled with 0.5 L of a strongly basic ion exchange resin (OH type), and 1 L of "PAS-A5" (manufactured by Nittobo Medical Co., Ltd.) was passed through the column at a flow rate of 50 ml/min to obtain an adjusted cationic polymer solution 1. PAS-A5 is a cationic polymer of a quaternary ammonium salt (diallyldimethylammonium chloride-sulfur dioxide copolymer). The solid content of the obtained adjusted cationic polymer solution 1 was 40%.

• Preparation of processing solution

3 parts by weight (solid content) of the obtained adjusted cationic polymer solution 1, 2 parts by weight of lactic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 $\mu$m filter to obtain a processing solution 1 (pH 8.5, chloride ion concentration 4.6 kg/m$^3$).

(Example 2)

• Adjustment of cationic polymer

The adjusted cationic polymer solution 1 obtained in Example 1 was once again passed through the column at a flow rate of 50 ml/min to obtain an adjusted cationic polymer solution 2. The solid content of the obtained adjusted cationic polymer solution 2 was 40%.

• Preparation of processing solution

3 parts by weight (solid content) of the obtained adjusted cationic polymer solution 2, 2 parts by weight of lactic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 $\mu$m filter to obtain a processing solution 2 (pH 9.0, chloride ion concentration 0.5 kg/m$^3$).

(Example 3)

By the same manner as in Example 1 except that the amount of the adjusted cationic polymer solution 1 of Example 1 was changed from 3 parts by weight to 0.5 parts by weight, a processing solution 3 was obtained (pH 7.8, chloride ion concentration 1.1 kg/m$^3$).

(Example 4)

By the same manner as in Example 2 except that the amounts of the adjusted cationic polymer solution 2 and the lactic acid of Example 2 were changed from 3 parts by weight to 30 parts by weight and from 2 parts by weight to 18 parts by weight, respectively, and the amount of the propylene glycol was changed to 5 parts by weight, a processing solution 4 was obtained (pH 9.0, chloride ion concentration 5.0 kg/m$^3$).

(Example 5)

• Adjustment of cationic polymer

The column was filled with 0.5 L of a strongly basic ion exchange resin (OH type), and 1 L of "PAS-21" (manufactured by Nittobo Medical Co., Ltd.) was passed through the column at a flow rate of 50 ml/min to obtain an adjusted cationic polymer solution 3. "PAS-21" is a cationic polymer of a secondary amine (diallylamine polymer). The solid content of the obtained adjusted cationic polymer solution 3 was 15%.

• Preparation of processing solution

3 parts by weight (solid content) of the obtained adjusted cationic polymer solution 3, 2 parts by weight of lactic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 $\mu$m filter to obtain a processing solution 5 (pH 8.4, chloride ion concentration 3.1 kg/m$^3$).

(Example 6)

• Adjustment of cationic polymer

The column was filled with 0.5 L of a strongly basic ion exchange resin (OH type), and 1 L of "PAS-2201CL" (manufactured by Nittobo Medical Co., Ltd.) was passed through the column at a flow rate of 50 ml/min to obtain an adjusted cationic polymer solution 4. "PAS-21" is a cationic polymer of a tertiary amine (methyldiallylamine hydrochloride-sulfur dioxide copolymer). The solid content of the obtained adjusted cationic polymer solution 4 was 25%.

• Preparation of processing solution

3 parts by weight (solid content) of the obtained adjusted cationic polymer solution 4, 2 parts by weight of lactic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 $\mu$m filter to obtain a processing solution 6 (pH 8.2, chloride ion concentration 3.3 kg/m$^3$).

(Example 7)

By the same manner as in Example 1 except that the amount of the adjusted cationic polymer solution 1 of Example 1 was changed from 3 parts by weight (solid content) to 0.4 parts by weight (solid content), a processing solution 7 was obtained (pH 7.3, chloride ion concentration 1.0 kg/m$^3$).

(Comparative Example 1)

3 parts by weight (solid content) of "PAS-A5" (manufactured by Nittobo Medical Co., Ltd.), 1% of sodium hydroxide of 1 N, 1 part by weight of nonionic surfactant "Surfynol 440" (manufactured by Nissin Chemical Industry Co., Ltd.), 10 parts by weight of propylene glycol, and water as the balance were mixed, and then filtered with a 5 μm filter to obtain a processing solution 8 (pH 7.3, chloride ion concentration 5.6 kg/m$^3$).

(Comparative Example 2)

3 parts by weight (solid content) of the obtained adjusted cationic polymer solution 1, 0.5 parts by weight of lactic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 μm filter to obtain a processing solution 9 (pH 10.0, chloride ion concentration 4.6 kg/m$^3$).

(Comparative Example 3)

3 parts by weight (solid content) of the adjusted cationic polymer solution 1, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 μm filter to obtain a processing solution 10 (pH 10.9, chloride ion concentration 4.6 kg/m$^3$).

(Comparative Example 5)

3 parts by weight (solid content) of the adjusted cationic polymer solution 1, 0.8 parts by weight of acetic acid, 1 part by weight of a nonionic surfactant "Surfynol 440" (manufactured by Nissin Chemical Industry Co., Ltd.), 10 parts by weight of propylene glycol, and water as the balance were mixed, and then filtered with a 5 μm filter to obtain a processing solution 11. (pH 8.4, chloride ion concentration 4.6 kg/m$^3$)

(Preparation of ink)

An ink was prepared using an anionic pigment dispersion "AE-2078F" (manufactured by Sanyo Color Works, Ltd.) having a pigment concentration of 20%, a urethane dispersion "SUPERFLEX 470" (manufactured by DKS Co., Ltd.) having a solid content of 38%, a nonionic surfactant "Surfynol 440" (manufactured by Nissin Chemical Industry Co., Ltd.), propylene glycol, and water.
Specifically, the composition of the ink was 4 weight % of the pigment, 8 weight % of the urethane, 30 weight % of the propylene glycol, 1 weight % of the surfactant, and water as the balance. By mixing at the above ratio and filtering with a 5 μm filter, the ink was obtained.

(Preparation of post-processing solution)

A post-processing solution was prepared using a silicone oil emulsion "POLON-MF-51" (manufactured by Shin-Etsu Chemical Co., Ltd.) having a silicone oil content of 39%, propylene glycol, and water. Specifically, the composition was 10 weight % of silicone oil, 30 weight % of propylene glycol, and water as the balance. By mixing at the above ratio and filtering with a 5 μm filter, the post-processing solution was obtained.

< Printing >

For inkjet printing, a flatbed printing jig in which KJ4B heads manufactured by KYOCERA Corporation were arranged in a conveyance direction was used. The preprocessing solution was charged into the first head, the ink was charged into the second head, and the post-processing solution was charged into the third head. Then, inkjet printing was performed under the following condition. For only Comparative Example 4, printing was performed without the preprocessing solution.

Cloth used: Polyester Tropical
Distance between cloth and head: 3 mm, Head temperature: 25°C
Drying: 150°C for 3 minutes (in oven)

< Evaluation test >

(Image density)

Color was measured using the fluorescence spectrophotometric colorimeter FD-5

(manufactured by Konica Minolta, Inc.).      The evaluation criteria were as follows.
Image density (OD) of 1.3 or more      "excellent", very good chromogenic property
Image density (OD) of 1.25 or more and less than 1.3      "good", good chromogenic property
Image density (OD) of less than 1.25      "poor", poor chromogenic property
(Yellowing of fabric)

Using the fluorescence spectrophotometric colorimeter FD-5 (manufactured by Konica Minolta, Inc.), the concentration of the fabric itself and the (yellow) concentration of a portion to which the preprocessing solution is applied were measured, and the difference between the two concentrations was defined as $\Delta$OD. The evaluation criteria were as follows.

$\Delta$OD of less than 0.05      "excellent", yellowing cannot be recognized visually, very good
$\Delta$OD of 0.05 or more and less than 0.10      "good", slightly yellowed, good
$\Delta$OD of 0.10 or more      "poor", yellowed

(Texture)

An unused textile printing target was folded in two along a warp (the longitudinal direction), and the distance between the lower fabric and the upper fabric (loop height) at the fold line was measured. The measured loop height of the unused textile printing target was defined as the loop height before textile printing. Next, the region in which a solid image was formed of a textile printing article for evaluation was folded in two along a warp (the longitudinal direction), and the loop height was measured. The measured loop height of the textile printing article for evaluation was defined as the loop height after textile printing. From the formula "loop height change rate = 100 $\times$ (loop height after textile printing)/(loop height before textile printing)", the loop height change rate (unit of %) between before and after textile printing was calculated. A lower loop height change rate means that the textile printing target has less hardened and less bulged by the textile printing, indicating that the degrading of texture of the textile printing article was suppressed. The evaluation criteria were as follows.

Less than 130%      "good", Texture change is small, good.
130% or more      "poor", Hard texture, poor.

(Corrosion of metal member)

0.1 g of a piece of SUS 430 was precisely weighed, immersed in a processing solution that was weighed to be 50 g in a 50 ml glass bottle, and left at 60°C for 1 month with the glass bottle capped. After 1 month, the piece of SUS 430 was taken out, washed with ion-exchanged water, dried, and weighed. The weight change rate was obtained by the following formula.

$$\text{(weight after being left)/(weight before being left)} \times 100 = \text{weight change rate (\%)}$$

The evaluation criteria were as follows.

Weight change rate (%) of 98% to 100%      "good", No corrosion, very small weight change.

(continued)

| Weight change rate (%) of less than 98% | "poor", Corrosion progressed, large weight reduction. |

The results of the above evaluation tests are summarized in Table 1.

[Table 1]

|  | Cationic polymer | Content (weight %) | Acid | Content (weight %) | pH | Halogen ion concentration (g/L) | Image density | Yellowing of fabric | Texture | Metal member |
|---|---|---|---|---|---|---|---|---|---|---|
| Example 1 | Quaternary ammonium salt | 3 | Lactic Acid | 2 | 8.5 | 4.6 | 1.35 Excellent | 0.02 Excellent | 110 Good | 99.8 Good |
| Example 2 | Quaternary ammonium salt | 3 | Lactic Acid | 2 | 9 | 0.5 | 1.34 Excellent | 0.03 Excellent | 109 Good | 99.5 Good |
| Example 3 | Quaternary ammonium salt | 0.5 | Lactic Acid | 2 | 7.8 | 1.1 | 1.30 Excellent | 0 Excellent | 121 Good | 99.9 Good |
| Example 4 | Quaternary ammonium salt | 30 | Lactic Acid | 18 | 9 | 5 | 1.45 Excellent | 0.09 Good | 105 Good | 99.8 Good |
| Example 5 | Secondary amine | 3 | Lactic Acid | 2 | 8.4 | 3.1 | 1.28 Good | 0.03 Excellent | 112 Good | 99.0 Good |
| Example 6 | Tertiary amine | 3 | Lactic Acid | 2 | 8.2 | 1 | 1.28 Good | 0.03 Excellent | 115 Good | 99.1 Good |
| Example 7 | Quaternary ammonium salt | 0.4 | Lactic Acid | 2 | 7.3 | 1 | 1.25 Good | 0.02 Excellent | 128 Good | 99.9 Good |
| Comparative Example 1 | Quaternary ammonium salt | 3 | - | - | 7.3 | 5.6 | 1.36 Excellent | 0.08 Good | 110 Good | 91.0 Poor |
| Comparative Example 2 | Quaternary ammonium salt | 3 | Lactic Acid | 0.5 | 10 | 4.6 | 1.35 Excellent | 0.15 Poor | 113 Good | 99.4 Good |
| Comparative Example 3 | Quaternary ammonium salt | 3 | - | - | 10.9 | 4.6 | 1.35 Excellent | 0.20 Poor | 114 Good | 99.4 Good |
| Comparative Example 4 | - | - | - | - | - | - | 1.10 Poor | 0 Excellent | 149 Poor | - |
| Comparative Example 5 | Quaternary ammonium salt | 3 | Acetic Acid | 0.8 | 8.4 | 4.6 | 1.33 Excellent | 0.25 Poor | 111 Good | 98.9 Good |

(Discussion)

From the results in Table 1, it was confirmed that corrosion of a metal member can be suppressed by the processing solution of the present disclosure. Furthermore, it was found that printing using the processing solution of the present disclosure is excellent in chromogenic property (image density) and can suppress yellowing of fabric, and by this printing, a printing article that is excellent in texture can be obtained. In particular, it was found from comparison between Examples 1 to 3 and Example 4 that yellowing of fabric is further suppressed by setting the amounts of the cationic polymer and the lactic acid within suitable ranges. Furthermore, it was found from comparison between Examples 1 to 3 and Examples 5 to 7 that use of the quaternary ammonium-containing cationic polymer at a suitable content exhibits a further excellent image density.

Meanwhile, in Comparative Example 1 in which the processing solution containing no lactic acid and having a halogen ion (chloride ion) concentration exceeding 5 $kg/m^3$ was used, corrosion of the metal member occurred. In Comparative Example 2 in which the processing solution having a pH exceeding 9 was used, and in Comparative Example 3 in which the processing solution having a pH exceeding 9 and containing no lactic acid was used, yellowing of fabric occurred. In Comparative Example 4 in which no preprocessing solution was used, the image density decreased and texture was poor. Furthermore, in Comparative Example 5 in which the processing solution using acetic acid instead of lactic acid was used, yellowing occurred.

**Reference Signs**

1     processing head
2     recording head
2a    first recording head
2b    second recording head
2c    third recording head
2d    fourth recording head
3     mounting table
10    Inkjet recording device
P     recording target

**Claims**

1. An inkjet processing solution, comprising:

   a cationic polymer; and
   lactic acid,
   wherein
   halogen ion concentration is 5 $kg/m^3$ or less and pH is 7 to 9.5,
   the cationic polymer includes a quaternary ammonium-containing cationic polymer selected from diallyldimethylammonium sulfur dioxide copolymer, diallyldimethylammonium chloride acrylamide copolymer, dimethylamine-ammonia-epichlorohydrin polycondensate, dimethylamine-ammonia-epichlorohydrin polycondensate, and mixtures thereof,
   a content of the cationic polymer is 0.5 weight % or more and 29.5 weight % or less with respect to the entire amount of the inkjet processing solution, and
   a content of the lactic acid is 0.2 weight % or more and 17.5 weight % or less with respect to the entire amount of the inkjet processing solution.

2. Use of the inkjet processing solution according to claim 1 for textile printing.

3. Use of the inkjet processing solution according to claim 2 for textile printing using an inkjet ink including an anionic pigment.

4. An ink set, comprising:

   the inkjet processing solution according to claim 1; and
   an inkjet ink including an anionic pigment.

**5.** A textile printing method, comprising:

applying the inkjet processing solution according to claim 1 to a textile printing target; and
thereafter, applying an inkjet ink including an anionic pigment to a region to which the inkjet processing solution
was applied.

**Patentansprüche**

**1.** Eine Tintenstrahlverarbeitungslösung, die aufweist:

ein kationisches Polymer und
Milchsäure,
wobei
Halogenionenkonzentration 5 kg/m$^3$ oder weniger beträgt und pH 7 bis 9,5 beträgt,
wobei das kationische Polymer ein quaternäres ammoniumhaltiges kationisches Polymer aufweist ausgewählt
aus Diallyldimethylammonium-Schwefeldioxid-Copolymer, Diallyldimethylammoniumchlorid-Acrylamid-Copolymer, Dimethylamin-Ammoniak-Epichlorhydrin-Polykondensat, Dimethylamin-Ammoniak-Epichlorhydrin-
Polykondensat und Mischungen davon,
ein Gehalt des kationischen Polymers 0,5 Gew.-% oder mehr und 29,5 Gew.-% oder weniger beträgt, bezogen
auf die Gesamtmenge der Tintenstrahlverarbeitungslösung, und
ein Gehalt der Milchsäure 0,2 Gew.-% oder mehr und 17,5 Gew.-% oder weniger beträgt, bezogen auf die
Gesamtmenge der Tintenstrahlverarbeitungslösung.

**2.** Verwendung der Tintenstrahlverarbeitungslösung gemäß Anspruch 1 zum Textildrucken.

**3.** Verwendung der Tintenstrahlverarbeitungslösung gemäß Anspruch 2 zum Textildrucken unter Verwendung einer
Tintenstrahltinte, die ein anionisches Pigment enthält.

**4.** Ein Tintenset, das aufweist:

die Tintenstrahlverarbeitungslösung gemäß Anspruch 1 und
eine Tintenstrahltinte, die ein anionisches Pigment enthält.

**5.** Ein Textildruckverfahren, das aufweist:

Aufbringen der Tintenstrahlverarbeitungslösung gemäß Anspruch 1 auf ein Textildruckziel und
anschließendes Aufbringen einer Tintenstrahltinte, die ein anionisches Pigment enthält, auf einen Bereich, auf
den die Tintenstrahlverarbeitungslösung aufgebracht wurde.

**Revendications**

**1.** Une solution de traitement de jet d'encre, comprenant:

un polymère cationique et
de l'acide lactique,
dans laquelle
concentration en ions halogènes est inférieure ou égale à 5 kg/m$^3$ et pH est de 7 à 9,5,
le polymère cationique comprend un polymère cationique contenant de l'ammonium quaternaire choisi parmi le
copolymère de diallyldiméthylammonium et de dioxyde de soufre, le copolymère de chlorure de diallyldiméthylammonium et d'acrylamide, le polycondensat de diméthylamine, d'ammoniac et d'épichlorhydrine, le polycondensat de diméthylamine, d'ammoniac et d'épichlorhydrine, et leurs mélanges,
une teneur en polymère cationique est supérieure ou égale à 0,5 % en poids et inférieure ou égale à 29,5 % en
poids par rapport à la quantité totale de la solution de traitement de jet d'encre , et
une teneur en acide lactique est supérieure ou égale à 0,2 % et inférieure ou égale à 17,5 % en poids par rapport à
la quantité totale de la solution de traitement de jet d'encre .

**2.** Utilisation de la solution de traitement de jet d'encre selon la revendication 1 pour impression textile.

**3.** Utilisation de la solution de traitement de jet d'encre selon la revendication 2 pour impression textile à l'aide d'encre à jet d'encre comprenant un pigment anionique.

**4.** Un ensemble d'encres, comprenant :

la solution de traitement de jet d'encre selon revendication 1 et
une encre à jet d'encre comprenant un pigment anionique.

**5.** Un procédé d'impression textile, comprenant :

appliquer la solution de traitement de jet d'encre selon revendication 1 à une cible d'impression textile et ensuite, appliquer une encre à jet d'encre comprenant un pigment anionique à une région à laquelle la solution de traitement de jet d'encre a été appliquée.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012111855 A1
- JP 5721048 B
- WO 2014023675 A1
- JP H10237372 A
- JP 2006152454 A
- JP 2019026963 A
- JP 2014194106 A
- JP 2004090456 A
- JP 2011251436 A
- JP H4259590 A
- JP H692010 A